# EUROPEAN PATENT SPECIFICATION

(11) **EP 4 250 209 B1**
(45) Date of publication and mention of the grant of the patent: **01.05.2024**
(21) Application number: 22164507.0
(22) Date of filing: 25.03.2022
(51) Int. Cl.: G06Q 20/20, G06Q 30/00, G07F 17/32, G07F 17/42, G06Q 30/06, G07G 1/00, G06F 21/44, G06Q 20/32, G06Q 20/38, G06Q 20/40

(54) **DEVICES, METHODS AND A SYSTEM FOR SECURE ELECTRONIC PAYMENT TRANSACTIONS**
VORRICHTUNGEN, VERFAHREN UND SYSTEM FÜR SICHERE ELEKTRONISCHE BEZAHLTRANSAKTIONEN
DISPOSITIFS, PROCÉDÉS ET SYSTÈME DE TRANSACTIONS DE PAIEMENTS ÉLECTRONIQUES SÉCURISÉES

(43) Date of publication of application: 27.09.2023
(73) Proprietor: Rubean AG, 81379 München (DE)
(72) Inventor: SPITZ, Stephan, 85757 Karlsfeld (DE)
(74) Representative: Patentship Patentanwaltsgesellschaft mbH

(56) References cited:
- EP-A1- 3 364 357
- WO-A1-2012/175606
- WO-A1-2018/234882

## Description

### TECHNICAL FIELD

The invention relates to electronic payment transactions. More specifically, the invention relates to devices, methods and a system for enabling secure electronic payment transactions involving a mobile merchant communication device, in particular a merchant mobile phone.

### BACKGROUND OF THE INVENTION

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Due to the widespread adoption of mobile phones, tablet computers and other types of COTS (commercial-off-the-shelf) devices in more and more electronic payment transactions POS terminals are being replaced, for instance, by mobile phones in that for processing a payment transaction a merchant mobile phone interacts with a payment card and/or a mobile phone of the customer. Often the authorization of the payment transaction requires the customer to enter a PIN or the like, i.e. security relevant data of the customer, into a virtual or physical PIN pad of the merchant mobile phone. Therefore, it has to be ensured that the security relevant data of the customer for authorizing the payment transaction are processed by the merchant mobile phone in a secure manner, i.e. that the security status of the merchant mobile phone is integer and the merchant can be trusted.

The patent document EP3364357 discloses a method for registering a mobile POS and a corresponding system.

### SUMMARY OF THE INVENTION

It is an object of the invention to provide improved devices, methods and a system for enabling secure electronic payment transactions involving a mobile merchant communication device, in particular a merchant mobile phone.

The foregoing and other objects are achieved by the subject matter of the independent claims. Further implementation forms are apparent from the dependent claims, the description and the figures.

According to a first aspect a backend system is provided, wherein the backend system is configured to enrol a mobile merchant communication device for performing a payment transaction with a mobile consumer communication device. The mobile merchant communication device may be, for instance, a mobile phone, a tablet computer or another type of COTS device of a merchant. The mobile merchant communication device is associated with a security level, i.e. a level of trustworthiness. The security level may depend on a number of hardware and/or software implemented security relevant functions of the merchant communication device, such as whether a bootloader of the mobile merchant communication device has been unlocked, a blacklist of software programs used by the merchant communication device, and/or a mapping of software programs used by the merchant communication device to a security score. Thus, the security level may indicate one of a plurality of security levels between a highly safe or trustworthy and an highly unsafe or untrustworthy mobile merchant communication device.

The backend system comprises a processing circuitry configured to generate a first electronic secret, in particular a human-readable secret, such as a PIN, for the mobile merchant communication device and a communication interface configured to receive an enrollment request from the mobile merchant communication device, wherein the enrollment request comprises the first electronic secret for authorizing the enrollment request and a second electronic secret, in particular an electronic key, generated by the mobile merchant communication device, and a digest value of a set of security-relevant data of the mobile merchant communication device, wherein the set of security-relevant data depends on the security level of the mobile merchant communication device. The processing circuitry is further configured, if the enrollment request is successful, to generate personalization data for the mobile merchant communication device. The communication interface is further configured to transmit the personalization data to the mobile merchant communication device for enabling the mobile merchant communication device to perform the payment transaction with the mobile consumer communication device. The enrollment process implemented by the backend system allows having a better control about the mobile merchant communication devices allowed to make payment transactions. Depending on the security level of the mobile merchant communication device the set of security-relevant data, which may be verified by means of the digest value, can comprise more or less data.

In a further embodiment, the processing circuitry is configured to generate the first electronic secret, in particular human-readable secret, and to trigger a transmission of the first electronic secret to the merchant operating the mobile merchant communication device.

In a further embodiment, the backend system further comprises a memory configured to store the second electronic secret, in particular an electronic key, generated by the mobile merchant communication device for identifying the mobile merchant communication device. In an embodiment, the memory may implement a database for storing the second electronic secret provided by the mobile merchant communication device.

In a further embodiment, the personalization data comprises one or more cryptographic keys, in particular one or more symmetric keys, for enabling the mobile merchant communication device to perform the payment transaction with the mobile consumer communication device. Thus, in an embodiment, only by means of the one or more symmetric keys the mobile merchant communication device will be able to perform the payment transaction with the mobile consumer communication device, which may further involve an interaction with a payment server.

In a further embodiment, the communication interface is configured to transmit the personalization data to the mobile merchant communication device in encrypted form based on a public key of the mobile merchant communication device. In an embodiment, the backend system may share the personalization data securely with the payment server.

In a further embodiment, the processing circuitry is further configured to digitally sign the personalization data using a private key of the backend system.

In a further embodiment, the first electronic secret is a human-readable PIN, which may be transmitted to the merchant and/or the mobile merchant communication device via a secure channel, such as secure email, paper letter, secure text message and the like.

In a further embodiment, the second electronic secret is generated by the mobile merchant communication device based on the first electronic secret. For instance, in an embodiment, the first electronic seed may be a seed value for a secret generation mechanism implemented by the mobile merchant communication device for generating the second electronic secret. In a further embodiment, the second electronic secret may be generated before receiving the first electronic secret.

In a further embodiment, the second electronic secret is a public key of the mobile merchant communication device with the corresponding private key of the mobile merchant communication device securely stored in the memory of the mobile merchant communication device.

In a further embodiment, the communication interface is further configured to attest the mobile merchant communication device based on the second electronic secret using a challenge response procedure.

In a further embodiment, the second electronic secret is a public key of the mobile merchant communication device, wherein the communication interface is configured to send a random number as the challenge to the mobile merchant communication device and to receive as the response the random number digitally signed with a private key of the mobile merchant communication device. The private key of the mobile merchant communication device may correspond to the public key of the mobile merchant communication device.

In a further embodiment, the backend system comprises a personalization server and an attestation server. The communication interface of the personalization server is configured to receive the enrollment request from the mobile merchant communication device and to forward the second electronic secret to the attestation server. The communication interface of the attestation server is configured to attest the mobile merchant communication device based on the second electronic secret using the challenge response procedure.

In a further embodiment, the communication interface is configured to attest the mobile merchant communication device based on the second electronic secret using a challenge response procedure intermittently or periodically at a plurality of points in time.

In a further embodiment, the communication interface is configured to attest the mobile merchant communication device based on the second electronic secret using a challenge response procedure intermittently or periodically at a plurality of points in time with a frequency depending on the security level of the mobile merchant communication device.

In a further embodiment, the digest value of the set of security-relevant data of the mobile merchant communication device comprises a hash value or a checksum value of the set of security-relevant data of the mobile merchant communication device.

In a further embodiment, the communication interface is further configured to attest the mobile merchant communication device based on the second electronic secret and the digest value of the set of security-relevant data of the mobile merchant communication device using the challenge response procedure.

In a further embodiment, the enrollment request further comprises information about the security level of the mobile merchant communication device.

According to a second aspect an electronic payment system is provided, wherein the electronic payment system comprises a mobile merchant communication device and a backend system according to the first aspect configured to enroll the mobile merchant communication device for performing a payment transaction with a mobile consumer communication device.

In a further embodiment, the electronic payment system further comprises a payment server, wherein the payment server is configured to authorize the payment transaction between the mobile merchant communication device and the mobile consumer communication device based on the personalization data shared by the backend system.

According to a third aspect a method of enrolling a mobile merchant communication device is provided for enabling the mobile merchant communication device to perform a payment transaction with a mobile consumer communication device. The method comprises the steps of:
generating a first electronic secret, in particular human-readable secret, for the mobile merchant communication device;
receiving an enrollment request from the mobile merchant communication device, wherein the enrollment request comprises the first electronic secret for authorizing the enrollment request, a second electronic secret generated by the mobile merchant communication device), and a digest value of a set of security-relevant data of the mobile merchant communication device, wherein the set of security-relevant data depends on the security level of the mobile merchant communication device;
generating, if the enrollment request is successful, personalization data for the mobile merchant communication device; and
transmitting the personalization data to the mobile merchant communication device for enabling the mobile merchant communication device to perform the payment transaction with the mobile consumer communication device.

In an embodiment, the method according to the third aspect further comprises receiving the first electronic secret by the mobile merchant communication device via a user interface, such as a virtual keypad, of the mobile merchant communication device.

The method according to the third aspect of the present invention can be performed by the backend system according to the first aspect of the present invention. Thus, further features of the method according to the third aspect of the present invention result directly from the functionality of the backend system according to the first aspect of the present invention as well as its different embodiments described above and below.

According to a fourth aspect, a computer program product comprising a non-transitory computer-readable storage medium for storing program code which causes a computer or a processor to perform the method according to the third aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including a backend system according to an embodiment for enrolling a merchant mobile communication device;
Fig. 2a shows a signaling diagram illustrating a process flow implemented by the electronic payment system of figure 1 according to an embodiment;
Fig. 2b shows a signaling diagram illustrating a process flow implemented by the electronic payment system of figure 1 according to a further embodiment; and
Fig. 3 shows a flow diagram illustrating steps of a method according to an embodiment for enrolling a merchant mobile communication device.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

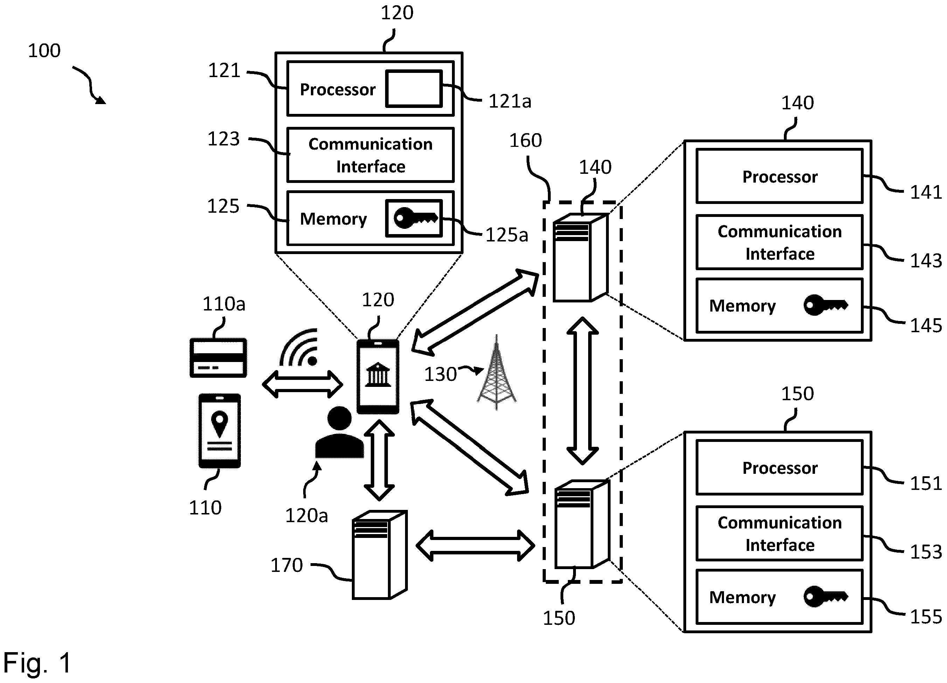

Figure 1 shows a schematic diagram illustrating an electronic payment system 100 according to an embodiment for processing an electronic payment transaction between a mobile merchant communication device 120 operated by a merchant 120a and a customer payment device. The mobile merchant communication device 120 may be, for instance, a mobile phone, tablet computer or the like operated by the merchant 120a., wherein the mobile merchant communication device 120 is associated with a security level, i.e. a level of trustworthiness. The security level may depend on a number of hardware and/or software implemented security relevant functions of the merchant communication device, such as whether a bootloader of the mobile merchant communication device 120 has been unlocked, a blacklist of software programs used by the mobile merchant communication device 120, and/or a mapping of software programs used by the mobile merchant communication device 120 to a security score. Thus, the security level may indicate one of a plurality of security levels between a highly safe or trustworthy and a highly unsafe or untrustworthy mobile merchant communication device 120. In an embodiment, the security level may be determined by a software application running on the mobile merchant communication device 120. In an embodiment, this software application may be further configured to handle the enrolment process described in more detail in the following.

As illustrated in figure 1, the mobile merchant communication device 120 may comprise a processor 121 for processing data, a communication interface 123 for communicating with the other components of the electronic payment system 100 and a memory 125 for storing data, in particular cryptographic keys which may be stored in a secure area 125a of the memory 125. The mobile merchant communication device 120 may further comprise a user interface, such as a physical or virtual PIN pad allowing the customer to enter data, such as a secret PIN for authorizing the payment transaction. The customer payment device may be an electronic chip card, i.e. a payment card 110a of a customer, or a mobile customer communication device 110, e.g. a mobile phone 110 of the customer. In an embodiment, the communication interface 123 of the mobile merchant communication device 120 may comprise an NFC interface for communicating with the mobile customer communication device 110. Alternatively or additionally, the mobile merchant communication device 120 and/or the mobile customer communication device 110 may comprise a camera for scanning a QR code for processing the payment transaction.

In addition to the mobile merchant communication device 120 and the mobile customer communication device 110 the electronic payment system 100 illustrated in figure 1 further comprises a backend system 160 for enrolling the mobile merchant communication device 120 for enabling the mobile merchant communication device 120 to perform the payment transaction with the mobile consumer communication device 110 and a payment server 170. In the embodiment shown in figure 1, the backend system 160 further comprises an attestation server 150, which is configured, once the mobile merchant communication device 120 has been enrolled by the backend system 160, to periodically or intermittently verify that the mobile merchant communication device 120 has been enrolled. As illustrated in figure 1, a personalization server 140 and the attestation sever 150 may be part of the backend system 160 for personalizing/enrolling and monitoring the mobile merchant communication device 120.

As illustrated in figure 1, the backend system 160 comprises a processing circuitry 141, 151 configured to generate a first electronic secret, in particular a human-readable secret, for the mobile merchant communication device 120 and a communication interface 143, 153 configured to receive an enrollment request from the mobile merchant communication device 120, in particular over a communication network 130. As will be described in more detail below, the enrollment request comprises the first electronic secret for authorizing the enrollment request from the mobile merchant communication device 120, a second electronic secret, in particular an electronic key (also referred to as cryptographic key), generated by the mobile merchant communication device 120, and a digest value of a set of security-relevant data of the mobile merchant communication device 120, wherein the set of security-relevant data depends on the security level of the mobile merchant communication device 120. The second electronic secret may be generated or obtained by a security enclave 121a implemented by the processor 121 of the mobile merchant communication device 120.

The set of security relevant data of the mobile merchant communication device 120 may be any data relevant to the security of the mobile merchant communication device 120 that may be used for generating the digest value, e.g. a MAC or a HASH value. For instance, the set of security relevant data may comprise at least part of the code of security relevant functions and/or applications running on the mobile merchant communication device 120, such as a bootloader, a payment application, and or security relevant parameters, such as a version number of a payment application running on the mobile merchant communication device 120. Depending on the security level of the mobile merchant communication device 120 the set of security-relevant data, which may be verified by means of the digest value, can comprise more or less data. For instance, for a very secure mobile merchant communication device 120 the set of security-relevant data may be a subset of the set of security-relevant data for a less secure mobile merchant communication device 120.

In an embodiment, the security enclave 121a comprises a hardware security enclave and/or a software security enclave implemented by the processing circuitry 121 of the mobile merchant communication device 120. In an embodiment, the security enclave 121a may be implemented using virtualization techniques. In an embodiment, the security enclave 121a may use a different partition of a RAM of the mobile merchant communication device 120 and/or data access using "memory mapped I/O". As will be appreciated, the main purpose of the security enclave 121a is to isolate the processing of security critical tasks from standard processing tasks of the mobile merchant communication device 120. This can be achieved by using a single processor-core 121 having two execution modes, one secure mode and another mode for standard processes. In this case the RAM and registers assigned to the single core are duplicated and one set is assigned to the normal mode and the other set to the secure execution mode. According to another embodiment, the security enclave 121a may be implemented using a multi-processor-core architecture with at least one secure-core with an own RAM, which is dedicated to executing only security-critical processes.

The processing circuitry 141, 151 is further configured, if the enrollment request is successful, to generate personalization data for the mobile merchant communication device 120. The communication interface 143, 153 is further configured to transmit the personalization data to the mobile merchant communication device 120 for enabling the mobile merchant communication device 120 to perform the payment transaction with the mobile consumer communication device 110.

In an embodiment, the processing circuitry 141, 151 is configured to generate the first electronic secret, in particular human-readable secret, and to trigger a transmission of the first electronic secret to the merchant 120a operating the mobile merchant communication device 120. In an embodiment, once generated, the human-readable first secret may be transmitted to the merchant 120a and/or the mobile merchant communication device 120 via a secure channel, such as secure email, paper letter, secure text message and the like so that the merchant 120a may enroll the mobile merchant communication device 120 using the human-readable first secret.

In an embodiment, the backend system 140 further comprises at least a memory 145, 155 configured to store the second electronic secret, in particular an electronic key, generated by the mobile merchant communication device 120 for identifying the mobile merchant communication device 120.

In an embodiment, the personalization data comprises one or more cryptographic keys, in particular one or more symmetric keys, for enabling the mobile merchant communication device 120 to perform the payment transaction with the mobile consumer communication device 110.

In an embodiment, the communication interface 143, 153 is configured to transmit the personalization data to the mobile merchant communication device 120 in encrypted form based on a public key of the mobile merchant communication device 120.

In an embodiment, the processing circuitry 141, 151 is further configured to digitally sign the personalization data using a private key of the backend system, in particular the personalization server 140.

In an embodiment, the second electronic secret is generated by the mobile merchant communication device 120 based on the first electronic secret.

In an embodiment, the second electronic secret is a public key of the mobile merchant communication device 120.

In an embodiment, the communication interface 143, 153 is further configured to attest the mobile merchant communication device 120 based on the second electronic secret using a challenge response procedure.

In an embodiment, the second electronic secret is a public key of the mobile merchant communication device 120. The communication interface 143, 153 may be configured to send a random number as the challenge to the mobile merchant communication device 120 and to receive as the response the random number digitally signed with the public key of the mobile merchant communication device 120.

In an embodiment, the communication interface 143 of the personalization server 140 may be configured to receive the enrollment request from the mobile merchant communication device 120 and to forward the second electronic secret to the attestation server 150. The communication interface 153 of the attestation server 150 may be configured to attest the mobile merchant communication device 120 based on the second electronic secret using the challenge response procedure.

In an embodiment, the communication interface 143, 153 is configured to attest the mobile merchant communication device 120 based on the second electronic secret using a challenge response procedure intermittently or periodically at a plurality of points in time.

In an embodiment, the communication interface 143, 153 is configured to attest the mobile merchant communication device 120 based on the second electronic secret using a challenge response procedure intermittently or periodically at a plurality of points in time with a frequency depending on the security level of the mobile merchant communication device 120.

In an embodiment, the digest value of the set of security-relevant data of the mobile merchant communication device 120 comprises a hash value or a checksum value of the set of security-relevant data of the mobile merchant communication device 120. In an embodiment, the communication interface 153 is further configured to attest the mobile merchant communication device 120 based on the second electronic secret and the digest value of the set of security-relevant data of the mobile merchant communication device 120 using the challenge response procedure

In an embodiment, the enrollment request further comprises information about the security level of the mobile merchant communication device 120.

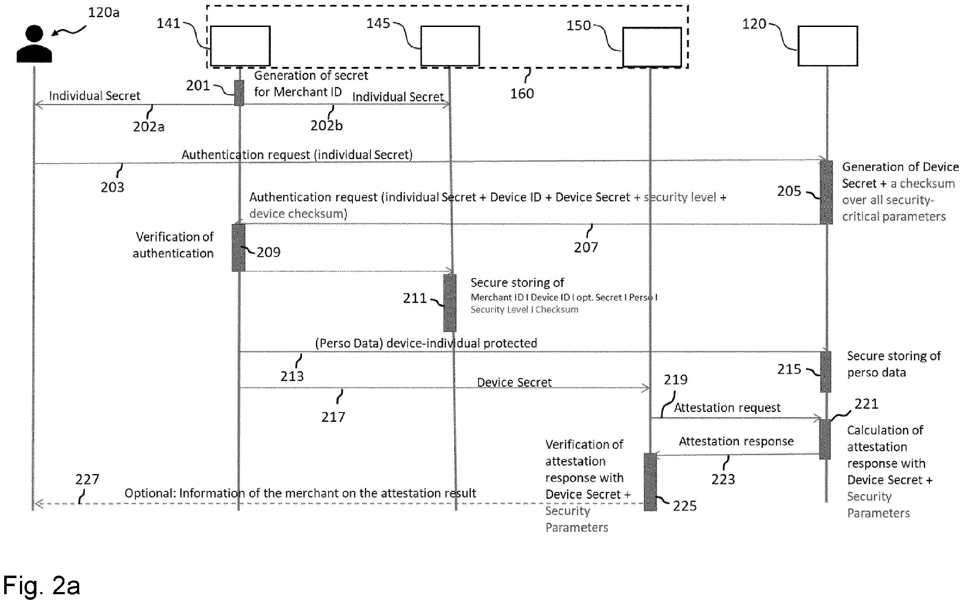

Figure 2a shows a signaling diagram illustrating the interaction of the mobile merchant communication device 120 and the backend system 160 according to an embodiment for enrolling the mobile merchant communication device 120. In figure 2a the following steps are illustrated, some of which already have been described in the context of figure 1 above.

In step 201 of figure 2a, the processing circuitry 141 of the personalization server 140 generates the human-readable first secret for the merchant 120a, which may be associated with a merchant identifier.

In steps 202a,b of figure 2a, the human-readable first secret is transmitted via a secure channel to the merchant 120a, for instance, electronically, such as by email or text message, and/or by paper letter and stored in the database of the memory 145 of the personalization server 140 together with the merchant identifier.

In step 203 of figure 2a, the merchant 120a, who has securely received the human-readable first secret, triggers the enrollment process by authenticating himself vis-à-vis the mobile merchant communication device 120, for instance, by manually entering the human-readable first secret, which may be a PIN, via a virtual keypad of the mobile merchant communication device 120. This authentication and the further enrollment process may be handled by an enrollment application running on the mobile merchant communication device 120.

In response to a successful authentication of the merchant 120a using the human-readable first secret, the mobile merchant communication device 120 generates in step 205 of figure 2a the second electronic secret. In an embodiment, the mobile merchant communication device 120 may generate the second electronic secret based on the first electronic secret. For instance, the first electronic secret may be a seed value for generating the second electronic secret. The merchant communication device 120 is further configured to generate a digest value, in particular a hash value or a checksum, of a set of security-relevant data of the mobile merchant communication device 120. In an embodiment, the set of security-relevant data of the merchant communication device 120 may depend on the security level of the mobile merchant communication device 120.

In step 207 of figure 2a, the mobile merchant communication device 120 sends an enrollment request to the personalization server 140. In addition to the first secret, the second secret and the digest value the enrollment request may comprise the security level and/or a device identifier of the mobile merchant communication device 120, such as a hardware ID number.

In step 209 of figure 2a, the processing circuitry 141 of the personalization server 140 is configured to verify whether the enrollment request contains the first secret, i.e. whether the mobile merchant communication device 120, i.e. the merchant 120a are authenticated by the first secret.

If the authentication in step 209 is successful, in step 211 of figure 2a the second secret may be stored together with the device identifier, the digest value and personalization data in the database of the memory 145 of the personalization server 140. In an embodiment, the personalization data may be retrieved by the processing circuitry 141 from the memory 145 of the personalization server 140 and/or generated on the fly.

In step 213 of figure 2a, the personalization data is transmitted securely to the mobile merchant communication device 120. The personalization data enables the mobile merchant communication device 120 to perform a payment transaction with the mobile consumer communication device 110 and the payment server 170.

In step 215 of figure 2a, the personalization data is stored in the memory 125 of the mobile merchant communication device 120 for being accessible for future payment transactions with the mobile consumer communication device 110 and the payment server 170.

In step 217 of figure 2a, at least the second electronic secret and optionally the security level and/or the digest value is shared by the processing circuitry 141 with the attestation server 150.

In step 219 of figure 2a, the attestation server 150 initiates the challenge response procedure, i.e. an attestation of the integrity of the mobile merchant communication device 120 by transmitting an attestation request, i.e. the challenge to the mobile merchant communication device 120. The attestation server 150 may be configured to repeat step 219 intermittently or periodically with a rate depending on the security level of the mobile merchant communication device 120. For instance, for a mobile merchant communication device 120 considered unsecure (based on its security level), the attestation server 150 may be configured to repeat step 219 with a larger rate than for a mobile merchant communication device 120 considered secure (based on its security level).

In step 221 of figure 2a, in response to the attestation request, i.e. the challenge, the mobile merchant communication device 120 determines an attestation response based on the second electronic secret and the set of security-relevant data, in particular the digest value of the set of security-relevant data.

In step 223 of figure 2a, the mobile merchant communication device 120 transmits the attestation response to the attestation server 150.

In step 225 of figure 2a, the attestation server 150 verifies the attestation response based on the second electronic secret and the digest value.

In step 227 of figure 2a, the attestation server 150 may inform the merchant 120a of a positive or negative result of the attestation verification.

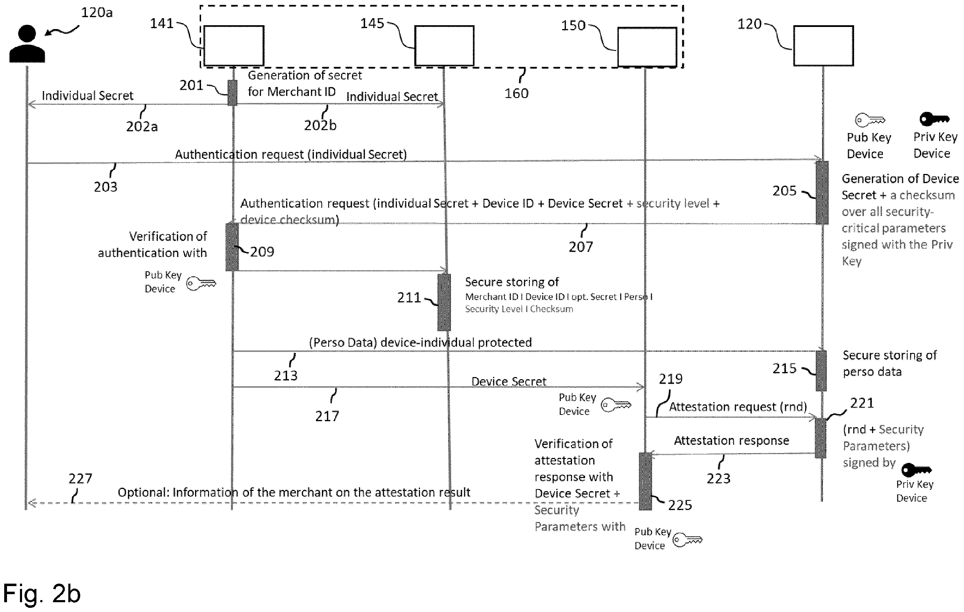

Figure 2b shows a signaling diagram illustrating a further embodiment of the interaction between the mobile merchant communication device 120 and the backend system 160 shown in figure 2a for enrolling the mobile merchant communication device 120 based on asymmetric cryptography. To this end, as illustrated in figure 2b, both the backend system 160 and the mobile merchant communication device 120 may comprise and/or generate a respective public and private key pair. In the following only the differences between the steps shown in figures 2a and 2b will be described in more detail.

In step 205 of figure 2b, the mobile merchant communication device 120 generates or obtains a public private key pair, wherein the public key of the mobile merchant communication device 120 constitutes the second electronic secret. As will be appreciated, the mobile merchant communication device 120 may be configured to securely store the corresponding private key.

In step 207 of figure 2b, the mobile merchant communication device 120 sends the enrollment request to the personalization server 140. In this embodiment, the enrollment request comprises the public key of the mobile merchant communication device 120 as the second secret in addition to the first secret, the security level, the digest value and the device identifier of the mobile merchant communication device 120. As illustrated in figure 2b, the processing circuitry 121 of the mobile merchant communication device 120 may encrypt this data using the public key of the personalization server 140. As will be appreciated, the personalization server 140 may have send the public key of the personalization server 140 to the mobile merchant communication device 120 before step 207.

In step 213 of figure 2b, the personalization data is transmitted securely from the personalization server 140 to the mobile merchant communication device 120. As illustrated in figure 2b, the personalization data, for instance, one or more symmetric payment keys, may be encrypted with the public key of the mobile merchant communication device 120 (which was part of the enrollment request in step 207) and digitally signed using the private key of the personalization server 140. These symmetric payment keys may be shared by the personalization server 140 with the payment server 170 so that the mobile merchant communication device 120 may use these keys for future payment transactions involving the mobile consumer communication device 110 and the payment server 170.

In step 217 of figure 2a, the second electronic secret constituted by the public key of the mobile merchant communication device 120 is shared by the processing circuitry 141 with the attestation server 150.

In step 219 of figure 2a, the attestation server 150 initiates the challenge response procedure, i.e. an attestation of the integrity of the mobile merchant communication device 120 by transmitting an attestation request comprising a random number to the mobile merchant communication device 120.

In step 221 of figure 2a, in response to the attestation request, the mobile merchant communication device 120 determines an attestation response comprising the random number and the set of security-relevant data, in particular the digest value thereof, which are jointly signed by the merchant communication device 120 using the private key of the merchant communication interface 120.

In step 225 of figure 2a, the attestation server 150 verifies the attestation response based on the second electronic secret constituted by the public key of the merchant communication device 120 and the set of security-relevant data, in particular the digest value thereof.

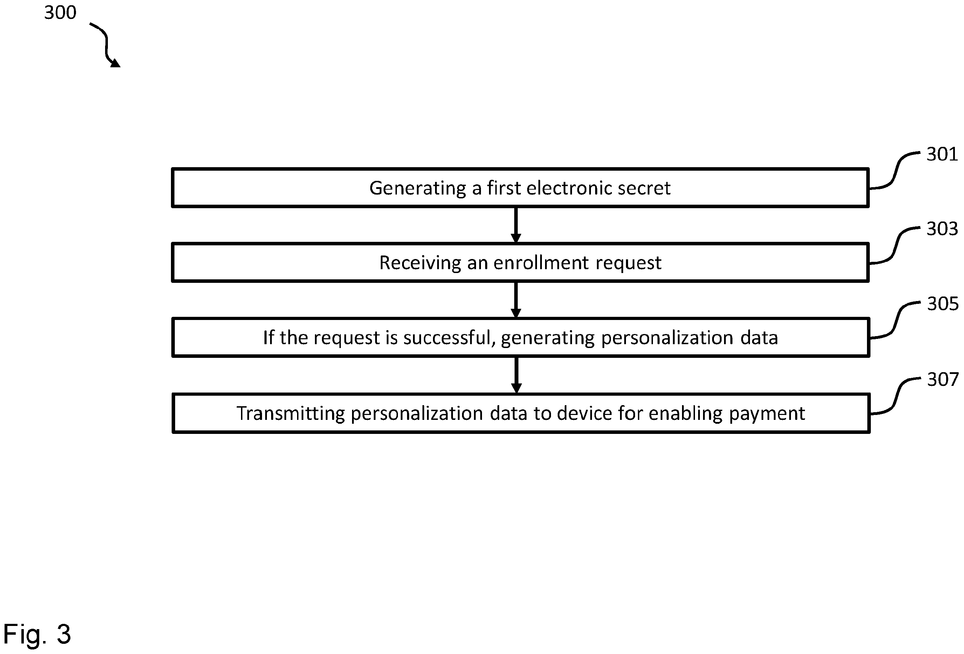

Figure 3 shows a flow diagram illustrating steps of a method 300 of enrolling the mobile merchant communication device 120 for enabling the mobile merchant communication device 120 to perform a payment transaction with the mobile consumer communication device 110. The method 300 comprises the steps of:
generating 301 a first electronic secret for the mobile merchant communication device 120;
receiving 303 an enrollment request from the mobile merchant communication device 120, wherein the enrollment request comprises the first electronic secret for authorizing the enrollment request, a second electronic secret generated by the mobile merchant communication device 120, and a digest value of a set of security-relevant data of the mobile merchant communication device 120, wherein the set of security-relevant data depends on the security level of the mobile merchant communication device 120; generating 305, if the enrollment request is successful, personalization data for the mobile merchant communication device 120; and
transmitting 307 the personalization data to the mobile merchant communication device 120 for enabling the mobile merchant communication device 120 to perform the payment transaction with the mobile consumer communication device 110.

In an embodiment, the method 300 further comprises a step of receiving the first electronic secret by the mobile merchant communication device 120 via a user interface of the mobile merchant communication device 120.

In an embodiment, the method 300 further comprises a step of attesting the integrity mobile merchant communication device 120 based on the second electronic secret using the challenge response procedure.

The method 300 can be performed by the backend system 160. Thus, further features of the method 300 result directly from the functionality of the backend system 160 as well as its different embodiments described above and below.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A backend system (160) configured to enroll a mobile merchant communication device (120) for performing a payment transaction with a mobile consumer communication device (110), the mobile merchant communication device (120) being associated with a security level; wherein the backend system (160) comprises:
a processing circuitry (141; 151) configured to generate a first electronic secret for the mobile merchant communication device (120); and
a communication interface (143; 153) configured to receive an enrollment request from the mobile merchant communication device (120), wherein the enrollment request comprises the first electronic secret for authorizing the enrollment request a second electronic secret generated by the mobile merchant communication device (120), and a digest value of a set of security-relevant data of the mobile merchant communication device (120), wherein the set of security-relevant data depends on the security level of the mobile merchant communication device (120);
wherein the processing circuitry (141; 151) is further configured, if the enrollment request is successful, to generate personalization data for the mobile merchant communication device (120), and
wherein the communication interface (143; 153) is further configured to transmit the personalization data to the mobile merchant communication device (120) for enabling the mobile merchant communication device (120) to perform the payment transaction with the mobile consumer communication device (110).

2. The backend system (160) of claim 1, wherein the processing circuitry (141; 151) is configured to generate the first electronic secret and to trigger a transmission of the first electronic secret to a merchant (120a) operating the mobile merchant communication device (120).

3. The backend system (160) of claim 1 or 2, wherein the backend system (160) further comprises a memory (145; 155) configured to store the second electronic secret generated by the mobile merchant communication device (120) for identifying the mobile merchant communication device (120).

4. The backend system (160) of any one of the preceding claims, wherein the personalization data comprises one or more cryptographic keys for enabling the mobile merchant communication device (120) to perform the payment transaction with the mobile consumer communication device (110).

5. The backend system (160) of any one of the preceding claims, wherein the communication interface (143; 153) is configured to transmit the personalization data to the mobile merchant communication device (120) in encrypted form based on a public key of the mobile merchant communication device (120).

6. The backend system (160) of any one of the preceding claims, wherein the processing circuitry (141; 151) is further configured to digitally sign the personalization data using a private key of the backend system (160).

7. The backend system (160) of any one of the preceding claims, wherein the first electronic secret is a human-readable PIN.

8. The backend system (160) of any one of the preceding claims, wherein the second electronic secret is generated by the mobile merchant communication device (120) based on the first electronic secret.

9. The backend system (160) of any one of the preceding claims, wherein the second electronic secret is a public key of the mobile merchant communication device (120).

10. The backend system (160) of any one of the preceding claims, wherein the communication interface (143; 153) is further configured to attest the mobile merchant communication device (120) based on the second electronic secret using a challenge response procedure.

11. The backend system (160) of claim 10, wherein the second electronic secret is a public key of the mobile merchant communication device (120), wherein the communication interface (143; 153) is configured to send a random number as the challenge to the mobile merchant communication device (120) and to receive as the response the random number digitally signed with a private key of the mobile merchant communication device (120).

12. The backend system (160) of any one of the preceding claims, wherein the backend system (160) comprises a personalization server (140) and an attestation server (150),
wherein the communication interface (143) of the personalization server (140) is configured to receive the enrollment request from the mobile merchant communication device (120) and to forward the second electronic secret to the attestation server (150), and
wherein the communication interface (153) of the attestation server (150) is configured to attest the mobile merchant communication device (120) based on the second electronic secret using the challenge response procedure.

13. The backend system (160) of any one of the preceding claims, wherein the communication interface (143; 153) is configured to attest the mobile merchant communication device (120) based on the second electronic secret using a challenge response procedure intermittently or periodically at a plurality of points in time.

14. The backend system (160) of claim 13, wherein the communication interface (143; 153) is configured to attest the mobile merchant communication device (120) based on the second electronic secret using a challenge response procedure intermittently or periodically at a plurality of points in time with a frequency depending on the security level of the mobile merchant communication device (120).

15. The backend system (160) of any one of the preceding claims, wherein the digest value of the set of security-relevant data of the mobile merchant communication device (120) comprises a hash value or a checksum value of the set of security-relevant data of the mobile merchant communication device (120).

16. The backend system (160) of any one of the preceding claims, wherein the communication interface (143, 153) is further configured to attest the mobile merchant communication device (120) based on the second electronic secret and the digest value of the set of security-relevant data of the mobile merchant communication device (120) using a challenge response procedure.

17. The backend system (160) of any one of the preceding claims, wherein the enrollment request further comprises information about the security level of the mobile merchant communication device (120).

18. An electronic payment system (100), comprising:
a mobile merchant communication device (120); and
a backend system (160) according to any one of the preceding claims configured to enroll the mobile merchant communication device (120) for performing a payment transaction with a mobile consumer communication device (110).

19. The electronic payment system (100) of claim 18, wherein the electronic payment system (100) further comprises a payment server (170), wherein the payment server (170) is configured to authorize the payment transaction between the mobile merchant communication device (120) and the mobile consumer communication device (110) based on the personalization data.

20. A method (300) of enrolling a mobile merchant communication device (120) for performing a payment transaction with a mobile consumer communication device (110), wherein the method (300) comprises:
generating (301) a first electronic secret for the mobile merchant communication device (120);
receiving (303) an enrollment request from the mobile merchant communication device (120), wherein the enrollment request comprises the first electronic secret for authorizing the enrollment request, a second electronic secret generated by the mobile merchant communication device (120), and a digest value of a set of security-relevant data of the mobile merchant communication device (120), wherein the set of security-relevant data depends on the security level of the mobile merchant communication device (120);
generating (305), if the enrollment request is successful, personalization data for the mobile merchant communication device (120); and
transmitting (307) the personalization data to the mobile merchant communication device (120) for enabling the mobile merchant communication device (120) to perform the payment transaction with the mobile consumer communication device (110).

21. The method (300) of claim 20, wherein the method (300) further comprises receiving the first electronic secret by the mobile merchant communication device (120) via a user interface of the mobile merchant communication device (120).

22. A computer program product comprising a computer-readable storage medium for storing program code which causes a computer or a processor to perform the method (300) of claim 20 or 21, when the program code is executed by the computer or the processor.

## Patentansprüche

1. Backend-System (160), das ausgebildet ist, eine mobile Händlerkommunikationsvorrichtung (120) für die Durchführung einer Zahlungstransaktion mit einer mobilen Verbraucherkommunikationsvorrichtung (110) zu registrieren, wobei der mobilen Händlerkommunikationsvorrichtung (120) ein Sicherheitslevel zugeordnet ist; wobei das Backend-System (160) umfasst:
eine Verarbeitungsschaltung (141; 151), die ausgebildet ist, ein erstes elektronisches Geheimnis für die mobile Händlerkommunikationsvorrichtung (120) zu generieren; und
eine Kommunikationsschnittstelle (143; 153), die ausgebildet ist, eine Registrierungsanfrage von der mobilen Händlerkommunikationsvorrichtung (120) zu empfangen, wobei die Registrierungsanfrage das erste elektronische Geheimnis zum Autorisieren der Registrierungsanfrage, ein zweites von der mobilen Händlerkommunikationsvorrichtung (120) generiertes elektronisches Geheimnis und einen Digest-Wert eines Satzes sicherheitsrelevanter Daten der mobilen Händlerkommunikationsvorrichtung (120) umfasst, wobei der Satz sicherheitsrelevanter Daten von dem Sicherheitslevel der mobilen Händlerkommunikationsvorrichtung (120) abhängt;
wobei die Verarbeitungsschaltung (141; 151) ferner ausgebildet ist, Personalisierungsdaten für die mobile Händlerkommunikationsvorrichtung (120) zu generieren, wenn die Registrierungsanfrage erfolgreich ist, und
wobei die Kommunikationsschnittstelle (143; 153) ferner ausgebildet ist, die Personalisierungsdaten an die mobile Händlerkommunikationsvorrichtung (120) zu übertragen, um es der mobilen Händlerkommunikationsvorrichtung (120) zu ermöglichen, die Zahlungstransaktion mit der mobilen Verbraucherkommunikationsvorrichtung (110) durchzuführen.

2. Backend-System (160) nach Anspruch 1, wobei die Verarbeitungsschaltung (141; 151) ausgebildet ist, das erste elektronische Geheimnis zu generieren und eine Übertragung des ersten elektronischen Geheimnisses an einen Händler (120a) auszulösen, der die mobile Händlerkommunikationsvorrichtung (120) betreibt.

3. Backend-System (160) nach Anspruch 1 oder 2, wobei das Backend-System (160) ferner einen Speicher (145; 155) umfasst, der ausgebildet ist, das zweite elektronische Geheimnis zu speichern, das von der mobilen Händlerkommunikationsvorrichtung (120) zur Identifizierung der mobilen Händlerkommunikationsvorrichtung (120) generiert wird.

4. Backend-System (160) nach einem der vorhergehenden Ansprüche, wobei die Personalisierungsdaten einen oder mehrere kryptografische Schlüssel umfassen, um es der mobilen Händlerkommunikationsvorrichtung (120) zu ermöglichen, die Zahlungstransaktion mit der mobilen Verbraucherkommunikationsvorrichtung (110) durchzuführen.

5. Backend-System (160) nach einem der vorhergehenden Ansprüche, wobei die Kommunikationsschnittstelle (143; 153) ausgebildet ist, die Personalisierungsdaten basierend auf einem öffentlichen Schlüssel der mobilen Händlerkommunikationsvorrichtung (120) in verschlüsselter Form an die mobile Händlerkommunikationsvorrichtung (120) zu übertragen.

6. Backend-System (160) nach einem der vorhergehenden Ansprüche, wobei die Verarbeitungsschaltung (141; 151) ferner ausgebildet ist, die Personalisierungsdaten unter Verwendung eines privaten Schlüssels des Personalisierungsservers (140) digital zu signieren.

7. Backend-System (160) nach einem der vorhergehenden Ansprüche, wobei das erste elektronische Geheimnis eine für Menschen lesbare PIN ist.

8. Backend-System (160) nach einem der vorhergehenden Ansprüche, wobei das zweite elektronische Geheimnis von der mobilen Händlerkommunikationsvorrichtung (120) basierend auf dem ersten elektronischen Geheimnis generiert wird.

9. Backend-System (160) nach einem der vorhergehenden Ansprüche, wobei das zweite elektronische Geheimnis ein öffentlicher Schlüssel der mobilen Händlerkommunikationsvorrichtung (120) ist.

10. Backend-System (160) nach einem der vorhergehenden Ansprüche, wobei die Kommunikationsschnittstelle (143; 153) ferner ausgebildet ist, die mobile Händlerkommunikationsvorrichtung (120) basierend auf dem zweiten elektronischen Geheimnis unter Verwendung eines Challenge-Response-Verfahrens zu attestieren.

11. Backend-System (160) nach Anspruch 10, wobei das zweite elektronische Geheimnis ein öffentlicher Schlüssel der mobilen Händlerkommunikationsvorrichtung (120) ist, wobei die Kommunikationsschnittstelle (143; 153) ausgebildet ist, eine Zufallszahl als die Challenge an die mobile Händlerkommunikationsvorrichtung (120) zu senden und die Zufallszahl digital signiert mit einem privaten Schlüssel der mobilen Händlerkommunikationsvorrichtung (120) als die Response zu empfangen.

12. Backend-System (160) nach einem der vorhergehenden Ansprüche, wobei das Backend-System (160) einen Personalisierungsserver (140) und einen Attestierungsserver (150) umfasst,
wobei die Kommunikationsschnittstelle (143) des Personalisierungsservers (140) ausgebildet ist, die Registrierungsanfrage von der mobilen Händlerkommunikationsvorrichtung (120) zu empfangen und das zweite elektronische Geheimnis an den Attestierungsserver (150) weiterzuleiten, und
wobei die Kommunikationsschnittstelle (153) des Attestierungsservers (150) ausgebildet ist, die mobile Händlerkommunikationsvorrichtung (120) basierend auf dem zweiten elektronischen Geheimnis unter Verwendung des Challenge-Response-Verfahrens zu attestieren.

13. Backend-System (160) nach einem der vorhergehenden Ansprüche, wobei die Kommunikationsschnittstelle (143; 153) ausgebildet ist, die mobile Händlerkommunikationsvorrichtung (120) basierend auf dem zweiten elektronischen Geheimnis unter Verwendung eines Challenge-Response-Verfahrens intermittierend oder periodisch an einer Vielzahl von Zeitpunkten zu attestieren.

14. Backend-System (160) nach Anspruch 13, wobei die Kommunikationsschnittstelle (143; 153) ausgebildet ist, die mobile Händlerkommunikationsvorrichtung (120) basierend auf dem zweiten elektronischen Geheimnis unter Verwendung eines Challenge-Response-Verfahrens intermittierend oder periodisch an einer Vielzahl von Zeitpunkten mit einer Frequenz zu attestieren, die von dem Sicherheitslevel der mobilen Händlerkommunikationsvorrichtung (120) abhängt.

15. Backend-System (160) nach einem der vorhergehenden Ansprüche, wobei der Digest-Wert des Satzes sicherheitsrelevanter Daten der mobilen Händlerkommunikationsvorrichtung (120) einen Hash-Wert oder einen Prüfsummenwert des Satzes sicherheitsrelevanter Daten der mobilen Händlerkommunikationsvorrichtung (120) umfasst.

16. Backend-System (160) nach einem der vorhergehenden Ansprüche, wobei die Kommunikationsschnittstelle (143, 153) ferner ausgebildet ist, die mobile Händlerkommunikationsvorrichtung (120) basierend auf dem zweiten elektronischen Geheimnis und dem Digest-Wert des Satzes sicherheitsrelevanter Daten der mobilen Händlerkommunikationsvorrichtung (120) unter Verwendung eines Challenge-Response-Verfahrens zu attestieren.

17. Backend-System (160) nach einem der vorhergehenden Ansprüche , wobei die Registrierungsanfrage ferner Informationen über das Sicherheitslevel der mobilen Händlerkommunikationsvorrichtung (120) umfasst.

18. Elektronisches Zahlungssystem (100), umfassend:
eine mobile Händlerkommunikationsvorrichtung (120); und
ein Backend-System (160) nach einem der vorhergehenden Ansprüche, das ausgebildet ist, die mobile Händlerkommunikationsvorrichtung (120) für die Durchführung einer Zahlungstransaktion mit einer mobilen Verbraucherkommunikationsvorrichtung (110) zu registrieren.

19. Elektronisches Zahlungssystem (100) nach Anspruch 18, wobei das elektronische Zahlungssystem (100) ferner einen Zahlungsserver (170) umfasst, wobei der Zahlungsserver (170) ausgebildet ist, die Zahlungstransaktion zwischen der mobilen Händlerkommunikationsvorrichtung (120) und der mobilen Verbraucherkommunikationsvorrichtung (110) basierend auf den Personalisierungsdaten zu autorisieren.

20. Verfahren (300) zur Registrierung einer mobilen Händlerkommunikationsvorrichtung (120) zur Durchführung einer Zahlungstransaktion mit einer mobilen Verbraucherkommunikationsvorrichtung (110), wobei das Verfahren (300) umfasst:
Generieren (301) eines ersten elektronischen Geheimnisses für die mobile Händlerkommunikationsvorrichtung (120);
Empfangen (303) einer Registrierungsanfrage von der mobilen Händlerkommunikationsvorrichtung (120), wobei die Registrierungsanfrage das erste elektronische Geheimnis zum Autorisieren der Registrierungsanfrage, ein zweites von der mobilen Händlerkommunikationsvorrichtung (120) generiertes elektronisches Geheimnis und einen Digest-Wert eines Satzes sicherheitsrelevanter Daten der mobilen Händlerkommunikationsvorrichtung (120) umfasst, wobei der Satz sicherheitsrelevanter Daten von dem Sicherheitslevel der mobilen Händlerkommunikationsvorrichtung (120) abhängt;
Generieren (305) von Personalisierungsdaten für die mobile Händlerkommunikationsvorrichtung (120), wenn die Registrierungsanfrage erfolgreich ist; und
Übertragen (307) der Personalisierungsdaten an die mobile Händlerkommunikationsvorrichtung (120), um es der mobilen Händlerkommunikationsvorrichtung (120) zu ermöglichen, die Zahlungstransaktion mit der mobilen Verbraucherkommunikationsvorrichtung (110) durchzuführen.

21. Verfahren (300) nach Anspruch 20, wobei das Verfahren (300) ferner das Empfangen des ersten elektronischen Geheimnisses durch die mobile Händlerkommunikationsvorrichtung (120) über eine Benutzerschnittstelle der mobilen Händlerkommunikationsvorrichtung (120) umfasst.

22. Computerprogrammprodukt, umfassend ein computerlesbares Speichermedium zum Speichern von Programmcode, der einen Computer oder einen Prozessor dazu veranlasst, das Verfahren (300) nach Anspruch 20 oder 21 auszuführen, wenn der Programmcode durch den Computer oder den Prozessor ausgeführt wird.

## Revendications

1. Système backend (160) configuré pour inscrire un dispositif de communication mobile pour commerçant (120) afin d'effectuer une transaction de paiement avec un dispositif de communication mobile pour consommateur (110), le dispositif de communication mobile pour commerçant (120) étant associé à un niveau de sécurité ; dans lequel le système backend (160) comprend :
un circuit de traitement (141 ; 151) configuré pour générer un premier secret électronique pour le dispositif de communication marchand mobile (120) ; et
une interface de communication (143 ; 153) configurée pour recevoir une demande d'inscription provenant du dispositif de communication marchand mobile (120), dans laquelle la demande d'inscription comprend le premier secret électronique pour autoriser la demande d'inscription, un deuxième secret électronique généré par le dispositif de communication marchand mobile (120), et une valeur de résumé d'un ensemble de données pertinentes pour la sécurité du dispositif de communication mobile pour commerçant (120), l'ensemble de données pertinentes pour la sécurité dépendant du niveau de sécurité du dispositif de communication mobile pour commerçant (120) ;
dans lequel les circuits de traitement (141 ; 151) sont en outre configurés, si la demande d'inscription réussit, pour générer des données de personnalisation pour le dispositif de communication marchand mobile (120), et
dans lequel l'interface de communication (143 ; 153) est en outre configurée pour transmettre les données de personnalisation au dispositif de communication mobile pour commerçant (120) afin de permettre au dispositif de communication mobile pour commerçant (120) d'effectuer la transaction de paiement avec le dispositif de communication mobile pour consommateur (110).

2. Système backend (160) selon la revendication 1, dans lequel les circuits de traitement (141 ; 151) sont configurés pour générer le premier secret électronique et pour déclencher une transmission du premier secret électronique à un commerçant (120a) exploitant la communication marchande mobile dispositif (120).

3. Système backend (160) selon la revendication 1 ou 2, dans lequel le système backend (160) comprend en outre une mémoire (145 ; 155) configurée pour stocker le deuxième secret électronique généré par le dispositif de communication marchand mobile (120) pour identifier le dispositif de communication marchand mobile (120).

4. Système backend (160) selon l'une quelconque des revendications précédentes, dans lequel les données de personnalisation comprennent une ou plusieurs clés cryptographiques pour permettre au dispositif de communication mobile marchand (120) d'effectuer la transaction de paiement avec le dispositif de communication mobile consommateur (110).

5. Système backend (160) selon l'une quelconque des revendications précédentes, dans lequel l'interface de communication (143 ; 153) est configurée pour transmettre les données de personnalisation au dispositif de communication marchand mobile (120) sous forme cryptée sur la base d'une clé publique de le dispositif de communication marchand mobile (120).

6. Système backend (160) selon l'une quelconque des revendications précédentes, dans lequel les circuits de traitement (141 ; 151) sont en outre configurés pour signer numériquement les données de personnalisation en utilisant une clé privée du système backend (160).

7. Système backend (160) selon l'une quelconque des revendications précédentes, dans lequel le premier secret électronique est un code PIN lisible par l'homme.

8. Système backend (160) selon l'une quelconque des revendications précédentes, dans lequel le deuxième secret électronique est généré par le dispositif de communication marchand mobile (120) sur la base du premier secret électronique.

9. Système backend (160) selon l'une quelconque des revendications précédentes, dans lequel le deuxième secret électronique est une clé publique du dispositif de communication marchand mobile (120).

10. Système backend (160) selon l'une quelconque des revendications précédentes, dans lequel l'interface de communication (143 ; 153) est en outre configurée pour attester le dispositif de communication marchand mobile (120) sur la base du deuxième secret électronique en utilisant une procédure de réponse au défi.

11. Système backend (160) selon la revendication 10, dans lequel le deuxième secret électronique est une clé publique du dispositif de communication marchand mobile (120), dans lequel l'interface de communication (143 ; 153) est configurée pour envoyer un nombre aléatoire comme défi au dispositif de communication marchand mobile (120) et pour recevoir comme réponse le nombre aléatoire signé numériquement avec une clé privée du dispositif de communication marchand mobile (120).

12. Système backend (160) selon l'une quelconque des revendications précédentes, dans lequel le système backend (160) comprend un serveur de personnalisation (140) et un serveur d'attestation (150),
dans lequel l'interface de communication (143) du serveur de personnalisation (140) est configurée pour recevoir la demande d'inscription du dispositif de communication marchand mobile (120) et pour transmettre le deuxième secret électronique au serveur d'attestation (150), et
dans lequel l'interface de communication (153) du serveur d'attestation (150) est configurée pour attester le dispositif de communication marchand mobile (120) sur la base du deuxième secret électronique à l'aide de la procédure de réponse au défi.

13. Système backend (160) selon l'une quelconque des revendications précédentes, dans lequel l'interface de communication (143 ; 153) est configurée pour attester le dispositif de communication marchand mobile (120) sur la base du deuxième secret électronique en utilisant une procédure de réponse au défi de manière intermittente ou périodiquement à plusieurs moments dans le temps.

14. Système backend (160) selon la revendication 13, dans lequel l'interface de communication (143 ; 153) est configurée pour attester le dispositif de communication marchand mobile (120) sur la base du deuxième secret électronique en utilisant une procédure de réponse au défi de manière intermittente ou périodique à un moment donné une pluralité de moments avec une fréquence dépendant du niveau de sécurité du dispositif de communication marchand mobile (120).

15. Système backend (160) selon l'une quelconque des revendications précédentes, dans lequel la valeur de résumé de l'ensemble de données pertinentes pour la sécurité du dispositif de communication marchand mobile (120) comprend une valeur de hachage ou une valeur de somme de contrôle de l'ensemble de données de sécurité des données pertinentes du dispositif de communication marchand mobile (120).

16. Système backend (160) selon l'une quelconque des revendications précédentes, dans lequel l'interface de communication (143, 153) est en outre configurée pour attester le dispositif de communication marchand mobile (120) sur la base du deuxième secret électronique et de la valeur de résumé du un ensemble de données pertinentes pour la sécurité du dispositif de communication marchand mobile (120) à l'aide d'une procédure de réponse à un défi.

17. Système backend (160) selon l'une quelconque des revendications précédentes, dans lequel la demande d'inscription comprend en outre des informations sur le niveau de sécurité du dispositif de communication marchand mobile (120).

18. Système de paiement électronique (100), comprenant :
un dispositif de communication marchand mobile (120) ; et
un système dorsal (160) selon l'une quelconque des revendications précédentes, configuré pour inscrire le dispositif de communication mobile pour commerçant (120) afin d'effectuer une transaction de paiement avec un dispositif de communication mobile pour consommateur (110).

19. Système de paiement électronique (100) selon la revendication 18, dans lequel le système de paiement électronique (100) comprend en outre un serveur de paiement (170), dans lequel le serveur de paiement (170) est configuré pour autoriser la transaction de paiement entre le dispositif de communication mobile du commerçant (120) et le dispositif de communication mobile grand public (110) sur la base des données de personnalisation.

20. Procédé (300) d'inscription d'un dispositif de communication marchand mobile (120) pour effectuer une transaction de paiement avec un dispositif de communication consommateur mobile (110), dans lequel le procédé (300) comprend :
générer (301) un premier secret électronique pour le dispositif de communication marchand mobile (120) ;
recevoir (303) une demande d'inscription provenant du dispositif de communication marchand mobile (120), dans lequel la demande d'inscription comprend le premier secret électronique pour autoriser la demande d'inscription, un deuxième secret électronique généré par le dispositif de communication marchand mobile (120), et une valeur de résumé d'un ensemble de données pertinentes pour la sécurité du dispositif de communication mobile pour commerçant (120), l'ensemble de données pertinentes pour la sécurité dépendant du niveau de sécurité du dispositif de communication mobile pour commerçant (120) ;
générer (305), si la demande d'inscription réussit, des données de personnalisation pour le dispositif de communication marchand mobile (120) ; et
transmettre (307) les données de personnalisation au dispositif de communication mobile pour commerçant (120) pour permettre au dispositif de communication mobile pour commerçant (120) d'effectuer la transaction de paiement avec le dispositif de communication mobile pour consommateur (110).

21. Procédé (300) selon la revendication 20, dans lequel le procédé (300) comprend en outre la réception du premier secret électronique par le dispositif de communication marchand mobile (120) via une interface utilisateur du dispositif de communication marchand mobile (120).

22. Produit programme informatique comprenant un support de stockage lisible par ordinateur pour stocker un code de programme qui amène un ordinateur ou un processeur à exécuter le procédé (300) selon la revendication 20 ou 21, lorsque le code de programme est exécuté par l'ordinateur ou le processeur.
